Europäisches Patentamt

European Patent Office

Office européen des brevets

(11) Numéro de publication: **0 399 914**
**A1**

(12) **DEMANDE DE BREVET EUROPEEN**

(21) Numéro de dépôt: 90401394.3

(22) Date de dépôt: 23.05.90

(51) Int. Cl.5: **A01B 73/06, A01B 63/22**

(30) Priorité: 26.05.89 FR 8906927

(43) Date de publication de la demande:
**28.11.90 Bulletin 90/48**

(84) Etats contractants désignés:
**AT DE DK ES GB IT SE**

(71) Demandeur: **ETABLISSEMENTS LACHAUD (S.A.)**
**Route d'Issoudun, Diou**
**F-36260 Reuilly(FR)**

(72) Inventeur: **Haond, Jean**
**La Garenne**
**F-36260 Migny(FR)**
Inventeur: **Lachaud, Philippe**
**7, rue de l'Egalité**
**F-36100 Issoudun(FR)**

(74) Mandataire: **Lemoine, Robert et al**
**Cabinet Malémont 42, Avenue du Président Wilson**
**F-75116 Paris(FR)**

(54) **Instrument aratoire comprenant un outil composé d'un élément central en avant de deux éléments latéraux pivotants.**

(57) L'instrument aratoire selon l'invention comprend un châssis (1) pourvu de moyens (28) pour l'atteler à un tracteur, un outil (2) composé d'un élément central (3) et de deux éléments latéraux (4,5) montés pivotants, en arrière de l'élément central, autour de deux axes (6,7) perpendiculaires au sol, une roue unique (14) déplaçable entre une position haute inactive dans laquelle elle est éloignée du sol et une position basse active dans laquelle elle s'appuie contre le sol, et des moyens de commande (20) pour faire pivoter les éléments latéraux (4,5) entre une position de travail dans laquelle ils s'étendent sensiblement parallèlement à l'élément central (3) lorsque la roue (14) est en position haute inactive et une position de transport dans laquelle ils s'étendent sensiblement perpendiculairement à l'élément central (3) lorsque la roue (14) est en position basse active. La roue (14) est montée à rotation sur un bâti (15) articulé sur le châssis (1) autour d'un axe (16) parallèle à l'élément central (3). Les moyens de commande (20) comprennent un vérin (21) reliant le bâti (15) au châssis (1) et deux bielles (22,23) reliant les sous-châssis (8,9) des éléments latéraux (4,5) au bâti (15).

FIG. 1

EP 0 399 914 A1

La présente invention concerne un instrument aratoire comportant un châssis pourvu de moyens pour l'atteler à un tracteur ou analogue, un outil allongé composé d'un élément central et de deux éléments latéraux montés sur des sous-châssis articulés sur le châssis, en arrière de l'élément central, autour de deux axes perpendiculaires au sol, des organes de roulement déplaçables entre une première position extrême dans laquelle ils permettent aux éléments latéraux de s'appuyer contre le sol et une seconde position extrême dans laquelle ils maintiennent les éléments latéraux au-dessus du sol, et des moyens de commande pour faire pivoter les éléments latéraux de l'outil par rapport au châssis entre une position de travail dans laquelle ils s'étendent sensiblement parallèlement à l'élément central lorsque les organes de roulement sont dans leur première position extrême et une position de transport dans laquelle ils s'étendent sensiblement perpendiculairement à l'élément central lorsque les organes de roulement sont dans leur seconde position extrême.

Les instruments aratoires actuels de ce type conservent une largeur relativement importante lorsque les éléments latéraux de leurs outils sont en position de transport, ce qui pose de sérieux problèmes de sécurité lors de leur transport sur route. Ils sont en outre coûteux à fabriquer et à entretenir. Par ailleurs, le changement de position des éléments latéraux de l'outil demande beaucoup de temps au conducteur du tracteur.

La présente invention se propose plus particulièrement de remédier à ces inconvénients et, pour ce faire, elle a pour objet un instrument aratoire du type susmentionné qui se caractérise en ce que les organes de roulement sont constitués par une roue unique montée à rotation sur un bâti articulé sur le châssis autour d'un axe parallèle à l'élément central de l'outil, cette roue étant éloignée du sol lorsqu'elle est dans sa première position extrême et s'appuyant contre le sol lorsqu'elle est dans sa seconde position extrême, et en ce que les moyens de commande font pivoter la roue vers sa seconde position extrême dès qu'ils commandent le pivotement des éléments latéraux vers leur position de transport, ou légèrement avant, et vers sa première position extrême dès qu'ils commandent le pivotement des éléments latéraux vers leur position de travail, ou légèrement après.

La présence d'une seule roue permet de réduire de façon notable la largeur de l'instrument aratoire en position de transport. L'instrument selon l'invention, lorsqu'il est attelé en position de transport à un tracteur, a en effet sensiblement la même largeur que ce dernier et peut donc être déplacé sur route dans de bonnes conditions de sécurité. De plus, lors du croisement avec un autre véhicule sur un chemin ou une route étroite, la roue unique n'a pas à venir sur l'accotement et ne risque pas dans ces conditions de rouler dans une saignée au niveau de laquelle l'instrument serait soumis à de violentes secousses.

Pour son déplacement sur de grandes distances, l'instrument selon l'invention peut par ailleurs être embarqué sur un véhicule sans le moindre démontage, ce qui permet des gains de temps appréciables.

Il convient encore de noter que l'instrument selon l'invention a un centre de gravité demeurant très bas lorsqu'il est en position de transport, et présente par conséquent une grande stabilité lors de son déplacement dans cette position.

Selon un mode de réalisation particulier de l'invention, le bâti comprend deux bras parallèles reliés au voisinage de l'une de leurs extrémités par une traverse, ces bras portant la roue au voisinage de leur autre extrémité et étant articulés sur le châssis, entre leurs deux extrémités, autour d'un axe parallèle à l'élément central de l'outil.

De préférence, les moyens de commande comprennent un vérin et deux bielles reliant la traverse, le premier au châssis et les secondes aux sous-châssis.

Grâce au vérin, le changement de position des éléments latéraux de l'outil peut être assuré sans à-coups et donc avec une grande souplesse.

Pour que l'instrument aratoire soit parfaitement stable, l'axe longitudinal du vérin et le centre de la roue sont dans le plan longitudinal de symétrie du châssis, les bielles étant symétriques par rapport à ce plan.

Il est par ailleurs avantageux que le châssis comporte un dispositif d'attelage apte à être relié aux deux articulations inférieures de l'attelage 3 points d'un tracteur.

La solution qui est proposée ici permet d'atteler l'instrument aratoire à un tracteur d'une manière parfaitement stable. Elle confère en outre une meilleure adhérence au tracteur en permettant un report du poids du châssis. De plus, elle évite le bourrage et les obstacles en permettant un soulèvement aisé de l'élément central.

Pour faciliter les demi-tours en bout de champ et les virages au transport, il est également avantageux que le dispositif d'attelage soit articulé sur le châssis autour d'un axe perpendiculaire à l'élément central de l'outil.

Un mode d'exécution de la présente invention sera décrit ci-après à titre d'exemple nullement limitatif en référence aux dessins annexés dans lesquels :

- la figure 1 est une vue en perspective schématique d'un instrument aratoire selon l'invention, les éléments latéraux de l'outil de cet instrument étant en position de travail ;

- la figure 2 est une vue de côté schématique de l'instrument visible sur la figure 1 ;

- la figure 3 est une vue analogue à la figure 2 mais montrant les éléments latéraux de l'outil en position de transport ;

- la figure 4 est une vue de dessus schématique partielle de l'instrument aratoire en position de travail ; et

- la figure 5 es t une vue analogue à la figure 4 mais montrant l'instrument en position de transport.

L'instrument aratoire représenté sur les dessins comprend tout d'abord un châssis 1 sous lequel s'étend un outil 2 composé d'un élément central 3 et de deux éléments latéraux 4,5 montés pivotants, en arrière de l'élément central 3, autour de deux axes 6,7 perpendiculaires au châssis 1.

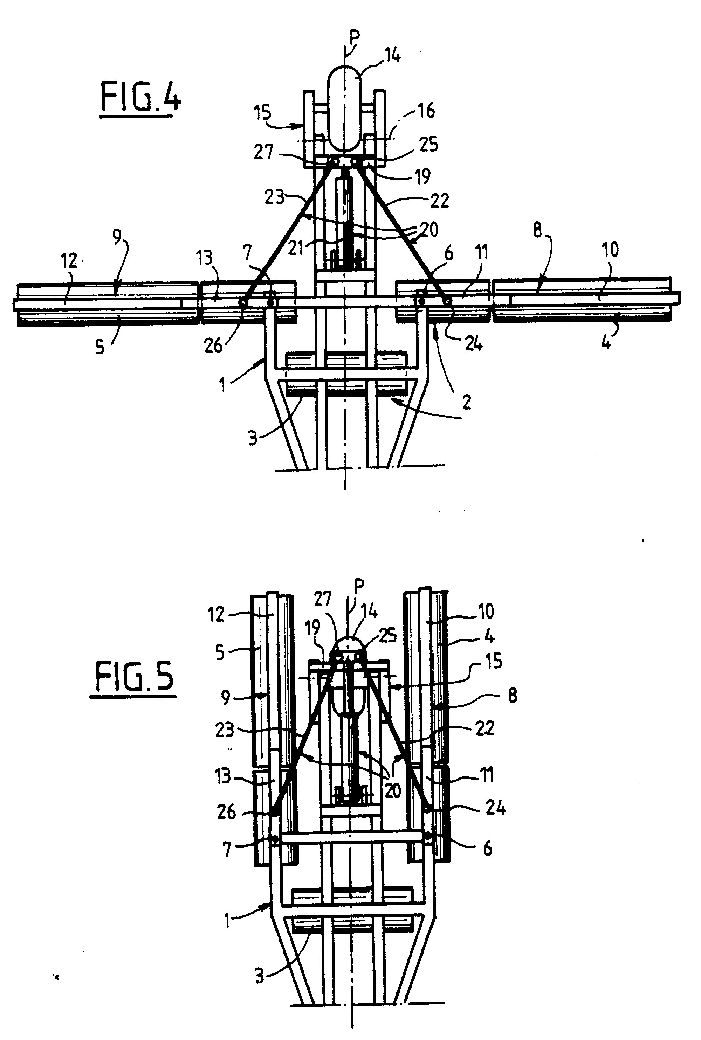

Plus précisément, les éléments latéraux 4,5 de l'outil s'étendent sous des sous-châssis 8,9 symétriques par rapport au plan longitudinal de symétrie P du châssis 1 (voir les figures 4 et 5), ces sous-châssis étant reliés à pivotement au châssis, respectivement autour des axes 6,7 tandis que les éléments latéraux 4,5 sont montés à rotation sous leur sous-châssis respectif.

Le sous-châssis 8 comporte un poutre en U 10 chevauchant l'élément latéral 4 de l'outil et une ossature à deux bras 11 dont l'une des extrémités est fixée sur la face supérieure de la poutre 10, sensiblement dans la partie centrale de celle-ci, et dont l'autre extrémité est articulée autour de l'axe 6.

De même, le sous-châssis 9 comporte une poutre en U 12 chevauchant l'élément latéral 5 de l'outil et une ossature à deux bras 13 dont l'une des extrémités est fixée sur la face supérieure de la poutre 12, sensiblement dans la partie centrale de celle-ci, et dont l'autre extrémité est articulée autour de l'axe 7.

Dans l'exemple représenté sur les dessins, l'outil 2 est un rouleau en tôle d'acier lisse. Il va de soi cependant qu'il pourrait être un rouleau en fonte lisse ou ondulée, un crosskill..., un outil du type à dents ou à disques, ou même un semoir, etc... sans que l'on sorte pour autant du cadre de la présente invention.

L'instrument aratoire comprend également une roue unique 14 montée à rotation sur un bâti 15 articulé à l'extrémité arrière du châssis 1, autour d'un axe 16 parallèle à l'élément central 3 de l'outil.

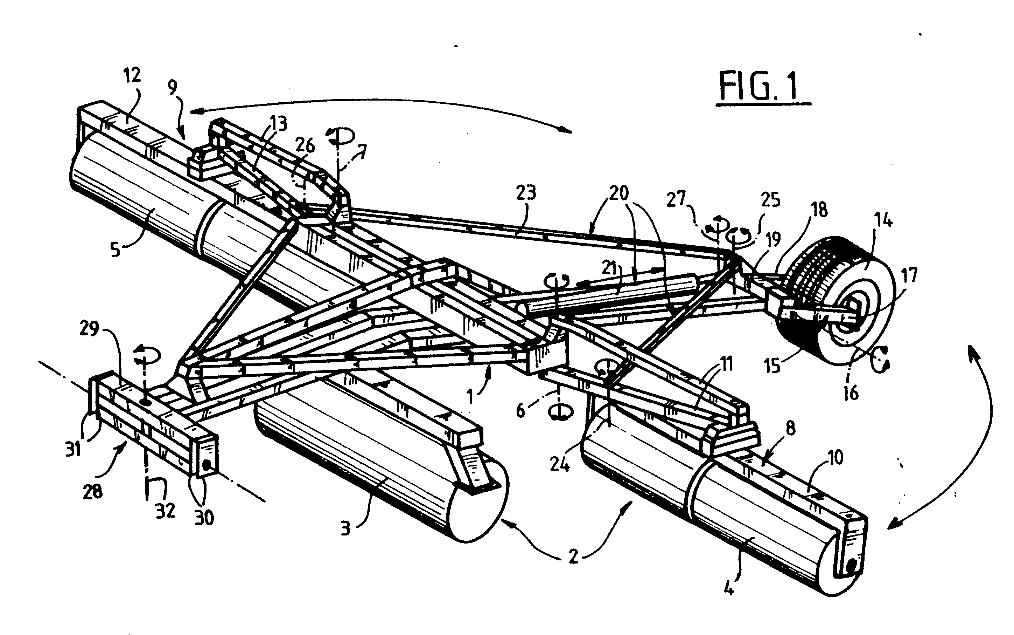

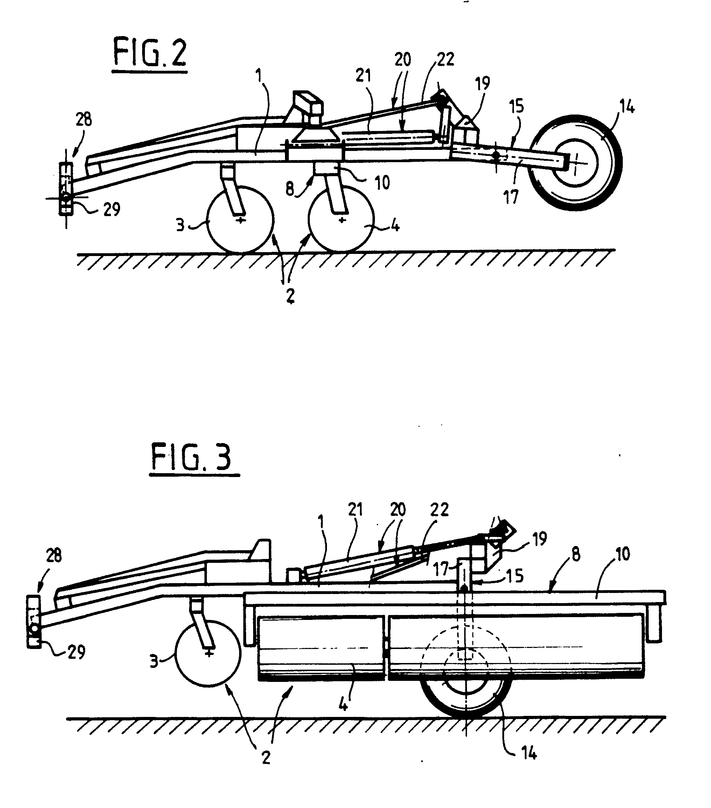

La roue 14, dont l'axe de rotation est parallèle à l'axe 16, est montée de telle sorte que son centre soit dans le plan longitudinal de symétrie P du châssis 1. Elle est déplaçable entre une position haute inactive (visible sur les figures 1,2 et 4) dans laquelle elle est éloignée du sol et une position basse active (visible sur les figures 3 et 5) dans laquelle est s'appuie contre le sol.

Quant au bâti 15, il comprend deux bras parallèles 17,18 portant la roue 14 au voisinage de l'une de leurs extrémités et reliés par une traverse 19 au voisinage de leur autre extrémité, son axe de pivotement 16 sur le châssis 1 étant situé entre les deux extrémités des bras 17,18.

L'instrument aratoire comprend encore des moyens de commande 20 destinés à faire pivoter les éléments latéraux 4,5 de l'outil par rapport au châssis 1, entre une position de travail (visible sur les figures 1,2 et 4) dans laquelle ils s'étendent sensiblement parallèlement à l'élément central 3 de l'outil lorsque la roue 14 est dans sa position haute inactive, et une position de transport (visible sur les figures 3 et 5) dans laquelle ils s'étendent sensiblement perpendiculairement à l'élément central 3 lorsque la roue 14 est dans sa position basse active.

Dans l'exemple représenté, les moyens de commande 20 comprennent un vérin 21 dont le cylindre est articulé sur le châssis 1 et dont la tige de piston est articulée sur la traverse 19 du bâti 15, et deux bielles 22,23 reliant les bras inférieurs des ossatures 11,13 des sous-châssis 8,9 à la traverse 19.

On notera ici que l'axe longitudinal du vérin 21 est dans le plan longitudinal de symétrie P du châssis et que les bielles 22,23 sont symétriques par rapport à ce plan, les extrémités de la première bielle étant articulées sur le bras inférieur de l'ossature 11 et sur la traverse 19, respectivement autour de deux axes 24,25 parallèles aux axes 6,7 tandis que les extrémités de la seconde bielle sont articulées sur le bras inférieur de l'ossature 13 et sur la traverse 19, respectivement autour de deux axes 26,27 également parallèles aux axes 6,7.

Le vérin 21 et les bielles 22,23 sont aptes à faire pivoter la roue 14 vers sa position active pendant qu'ils commandent le pivotement des éléments latéraux 4,5 de l'outil vers leur position de transport, et vers sa position haute inactive pendant qu'ils commandent le pivotement des éléments latéraux 4,5 vers leur position de travail.

Cependant, lorsque l'outil est du type à dents ou à disques, il peut être souhaitable que le vérin 21 et les bielles 22,23 fassent pivoter la roue 14 vers sa position basse active légèrement avant de commander le pivotement des éléments latéraux 4,5 vers leur position de transport, et vers sa position haute inactive légèrement après avoir commandé le pivotement des éléments latéraux 4,5 vers leur position de travail. Cette solution évite en effet que les dents ou les disques de l'outil se détériorent au contact du sol pendant le changement de position des éléments latéraux.

L'outil aratoire selon l'invention comprend par ailleurs un dispositif d'attelage 28 destiné à être relié aux deux articulations inférieures de l'attelage 3 points (non représenté) d'un tracteur. Le dispositif d'attelage 28 comprend un bâti 29 portant sur sa face antérieure, deux chapes 30,31 destinées à recevoir les articulations inférieures de l'attelage 3 points, le bâti 29 étant articulé sur le châssis 1 autour d'un axe 32 perpendiculaire à l'élément central 3 de l'outil.

Pour être complet, on précisera que le vérin 21 est un vérin à double effet et est relié au circuit hydraulique du tracteur par des conduits non représentés. Il peut ainsi être commandé par le conducteur depuis la cabine du tracteur.

On précisera également qu'en position de transport, les sous-châssis 8,9 peuvent avantageusement être reliés au voisinage de leur extrémité postérieure par une barre de liaison (non représentée) destinée à éviter qu'ils s'éloignent intempestivement de cette position et que la roue ne s'abaisse pendant le transport de l'instrument aratoire, en particulier en cas de rupture du flexible hydraulique.

L'instrument aratoire selon l'invention est très facile à utiliser. Quand il est attelé à l'arrière d'un tracteur et que les éléments latéraux 4,5 de l'outil 2 sont en position de travail, comme représenté sur les figures 1,2 et 4, le conducteur du tracteur peut en effet déplacer les éléments 4,5 de l'outil vers leur position de transport en commandant le vérin 21 de façon à provoquer la sortie de la tige de piston de celui-ci et à permettre au bâti 15 de déplacer la roue 14 dans sa position basse active pour qu'elle éloigne les éléments latéraux 4,5 du sol, puis en déplaçant vers le haut l'attelage 3 points du tracteur pour que celui-ci éloigne à son tour l'élément 3 de l'outil du sol.

Pour ramener les éléments 4,5 dans leur position de travail, le conducteur doit bien entendu effectuer les opérations inverses, c'est-à-dire abaisser l'attelage 3 points et commander le vérin 21 de façon à rétracter la tige de celui-ci.

## Revendications

1. Instrument aratoire comportant un châssis (1) pourvu de moyens (28) pour l'atteler à un tracteur ou analogue, un outil allongé (2) composé d'un élément central (3) et de deux éléments latéraux (4,5) montés sur des sous-châssis (8,9) articulés sur le châssis, en arrière de l'élément central, autour de deux axes (6,7) perpendiculaires au sol, des organes de roulement (14) déplaçables entre une première position extrême dans laquelle ils permettent aux éléments latéraux (4,5) de s'appuyer contre le sol et une seconde position extrême dans laquelle ils maintiennent les éléments latéraux au-dessus du sol, et des moyens de commande (20) pour faire pivoter les éléments latéraux

(4,5) de l'outil par rapport au châssis entre une position de travail dans laquelle ils s'étendent sensiblement parallèlement à l'élément central (3) lorsque les organes de roulement (14) sont dans leur première position extrême et une position de transport dans laquelle ils s'étendent sensiblement perpendiculairement à l'élément central (3) lorsque les organes de roulement (14) sont dans leur seconde position extrême, caractérisé en ce que les organes de roulement sont constitués par une roue unique (14) montée à rotation sur un bâti (15) articulé sur le châssis (1) autour d'un axe (16) parallèle à l'élément central (3) de l'outil (2), cette roue étant éloignée du sol lorsqu'elle est dans sa première position extrême et s'appuyant contre le sol lorsqu'elle est dans sa seconde position extrême, et en ce que les moyens de commande (20) font pivoter la roue (14) vers sa seconde position extrême dès qu'ils commandent le pivotement des éléments latéraux (4,5) vers leur position de transport, ou légèrement avant, et vers sa première position extrême dès qu'ils commandent le pivotement des éléments latéraux (4,5) vers leur position de travail, ou légèrement après.

2. Instrument aratoire selon la revendication 1, caractérisé en ce que le bâti (15) comprend deux bras parallèles (17,18) reliés au voisinage de l'une de leurs extrémités par une traverse (19), ces bras portant la roue (14) au voisinage de leur autre extrémité et étant articulés sur le châssis, entre leurs deux extrémités, autour d'un axe (16) parallèle à l'élément central (3) de l'outil.

3. Instrument aratoire selon la revendication 2, caractérisé en ce que les moyens de commande (20) comprennent un vérin (21) et deux bielles (22,23) reliant la traverse (19), le premier au châssis (1) et les secondes aux sous-châssis (8,9).

4. Instrument aratoire selon la revendication 3, caractérisé en ce que l'axe longitudinal du vérin (21) et le centre de la roue (14) sont dans le plan longitudinal de symétrie (P) du châssis (1), les bielles (22,23) étant symétriques par rapport à ce plan.

5. Instrument aratoire selon l'une quelconque des revendications précédentes, caractérisé en ce que les sous-châssis (8,9) comportent une poutre en U (10, respectivement 12) chevauchant l'élément latéral associé (4, respectivement 5) de l'outil et une ossature à deux bras (11, respectivement 13) dont l'une des extrémités est fixée sur la face supérieure de la poutre en U (10, respectivement 12), sensiblement dans la partie centrale de celle-ci, et dont l'autre extrémité est articulée sur le châssis (1) autour de l'axe correspondant (6, respectivement 7) qui est perpendiculaire à ce dernier.

6. Instrument aratoire selon l'une quelconque des revendications précédentes, caractérisé en ce que le châssis (1) comporte un dispositif d'attelage (28) apte à être relié aux deux articulations inférieures de l'attelage 3 points d'un tracteur.

7. Instrument aratoire selon la revendication 6, caractérisé en ce que le dispositif d'attelage (28) est articulé sur le châssis (1) autour d'un axe (32) perpendiculaire à l'élément central (3) de l'outil (2).

FIG.1

EP 0 399 914 A1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2406945 (YSTADS GJUTERI & MEK. VERKSTADS) <br> * page 7, ligne 22 - page 8, ligne 6; figures 3, 5 * <br> --- | 1-7 | A01B73/06 <br> A01B63/22 |
| Y | FR-A-2485322 (DEERE & CO.) <br> * page 3, lignes 11 - 17; figures 1, 2 * <br> --- | 1-7 | |
| A | FR-A-2483731 (FO.MO.DIS SA) <br> --- | | |
| A | DE-B-1008945 (FA. A.J. TROESTER) <br> ----- | | |

DOMAINES TECHNIQUES RECHERCHES (Int. Cl.5 )

A01B

Le présent rapport a été établi pour toutes les revendications

| Lieu de la recherche | Date d'achèvement de la recherche | Examinateur |
|---|---|---|
| LA HAYE | 31 AOUT 1990 | WOHLRAPP R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la hase de l'invention
E : document de brevet antérieur, mais publié à la date de dépôt ou après cette date
D : cité dans la demande
L : cité pour d'autres raisons
....................................................
& : membre de la même famille, document correspondant

EPO FORM 1503 03.82 (P0402)